# EUROPEAN PATENT APPLICATION

(11) **EP 1 375 326 A2**
(43) Date of publication of application: **02.01.2004**
(21) Application number: 03380128.3
(22) Date of filing: 29.05.2003
(51) Int. Cl.: B62K 9/00

(54) **Automatic progressive accelerator for children's electric vehicles**

(30) Priority: 04.06.2002 ES 200201277
(71) Applicant: Rodriguez Martinez, S.C., 03440 Ibi, Alicante (ES)
(72) Inventor: Rodriguez Ferre, José Manuel, 03440 IBI (Alicante) (ES)
(74) Representative: Canadell-Isern, Roberto

(57) **Abstract**

The object of this Patent is an "Automatic progressive accelerator for children's electric vehicles", the utility of which is implicit in this expression.

Its operating pedal (1) has the sole function of starting an automatic acceleration process through gradual timed stages, the acceleration thus being independent of the user's wishes and of the pressure exerted by the user on the pedal (1).

Its structure comprises these items:
- Two timing devices (2) to provide automatic control over when two connection relays act (4.1)-(4.2).
- Two power resistors (3.1)-(3.2) which, through being connected to or disconnected from the relays, enable the vehicle's motor(s) to accelerate in an automatic progressive manner, progressing from a very low speed when moving off, with just one resistor connected in series with the motors, to a medium speed with both resistors connected in parallel to each other and in series with the motors, and lastly to the vehicle's top speed with both resistors disconnected and the motor(s) being powered directly by the battery (5).

## Description

### OBJECT OF THE INVENTION

The object protected by this Patent is an "Automatic progressive accelerator for children's electric vehicles".

### BACKGROUND OF THE INVENTION

There are many known kinds of toy vehicles able to accommodate and transport a child. They are operated by one or more direct-current electric motors powered by a battery fitted in the vehicle itself.

The speed of these vehicles is controlled by means of conventional progressive accelerators, depending on and in proportion to the pressure exerted on a pedal.

These vehicles are intended for children to play with, though it is usually the case that children using them are not capable of controlling the acceleration by gradually varying the pressure they exert on the pedal with their feet. Experience shows that the typical behaviour of child users is to press the pedal directly all the way down straight away, making the vehicle start off with a jolt at full power.

This gives rise to a number of undesirable consequences, such as:

Owing to the force of inertia, the children are thrown back suddenly in the seat, which startles them.

This leads to an instinctive rejection of the toy, which is then discarded or underused.

Moreover, the starting torque overcomes the tyres' adhesion to the ground, causing them to skid and leading to undue tyre wear.

### DESCRIPTION OF THE INVENTION

The purpose of the invention that is the object of this Patent is to eliminate the drawbacks of conventional progressive pedal-operated accelerators as described above. The invention has been conceived and designed with this purpose as its priority.

The essence of the invention lies in removing the proportional relationship between the pressure exerted on the accelerator pedal and the speed of the vehicle. The pedal's only function is to start an automatic acceleration process that moves through gradual timed stages, the acceleration thus being independent of the user's wishes and of the pressure exerted by the user on the pedal.

The structure of the accelerator of this invention comprises the following items:

Two timing devices to provide automatic control over when two connection relays act.

Two power resistors which, through being connected and disconnected by the relays, enable the vehicle's motor(s) to accelerate in an automatic progressive manner, progressing from a very low speed when moving off, with just one resistor connected in series with the motors, to a medium speed with both resistors connected in parallel to each other and in series with the motors, and lastly to the vehicle's top speed with both resistors disconnected and the motor(s) being powered directly by the battery.

### DESCRIPTION OF THE FIGURES

To supplement the description of the invention and to facilitate understanding of the formal, structural and functional characteristics of its object, a diagram showing the connections and layout of the component parts is provided.

From that diagram, it can be seen that the sequence of operations involved in arranging the progressive acceleration of the vehicle is as shown in the following table:

| SPEED | RELAYS | | RESISTORS | |
|---|---|---|---|---|
| | 1 | 2 | 1 | 2 |
| Low (moving off) | Open | Open | Connected | Disconnected |
| Medium | Closed | Open | Connected | Connected |
| Full speed | Closed | Closed | Disconnected | Disconnected |

### DESCRIPTION OF A PREFERRED EMBODIMENT OF THE INVENTION

To show clearly the nature and scope of the advantageous application of the Automatic progressive accelerator for children's electric vehicles that is the object of the invention claimed herein, its structure and operation are now described with reference to a connection arrangement and a layout of component parts that are to be viewed in the broadest light and not regarded as restricting the application and content of the invention, since they represent a preferred embodiment of the object, provided for information purposes.

The command pedal (1) has the sole function of activating an automatic acceleration process moving through gradual timed stages, the acceleration thus being independent of the user's wishes and of the degree of pressure exerted by user on the pedal (1).

The structure comprises the following items:
Two timers (2) to provide automatic control over when the two connection relays (4.1)-(4.2) act.
Two power resistors (3.1)-(3.2) which, through being connected to or disconnected from the relays, enable the vehicle's motor(s) to accelerate in an automatic progressive manner, progressing from a very low speed when moving off, with just one resistor connected in series with the motors, to a medium speed with both resistors connected in parallel to each other and in series with the motors, and lastly to the vehicle's top speed with both resistors disconnected and the motor(s) being powered directly by the battery (5).

The system is completed in operative terms with a conventional reverser (6) serving to arrange the forward/reverse gear changing.

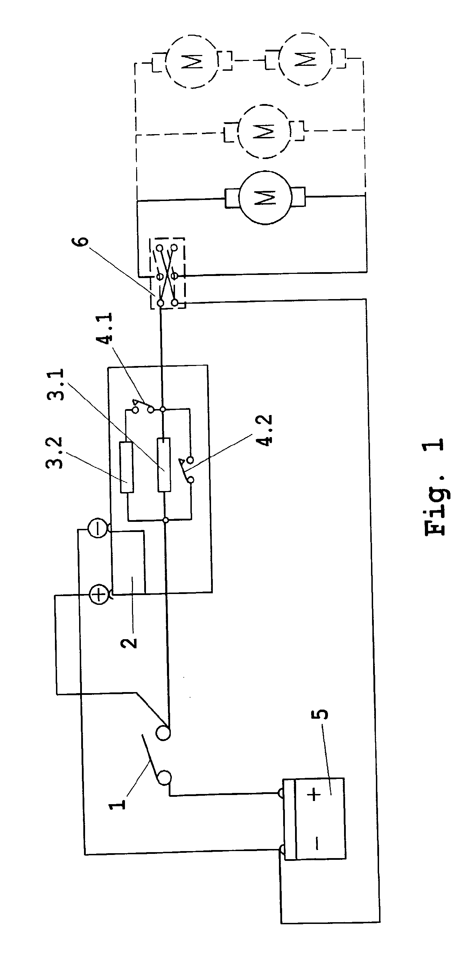

## Claims

1. Automatic progressive accelerator for children's electric vehicles, of the pedal-operated type, **characterised in that** said pedal's (1) only function is to start an automatic acceleration process that moves through gradual timed stages, the acceleration thus being independent of the user's wishes and of the pressure exerted by the user on the pedal (1).

2. Automatic progressive accelerator for children's electric vehicles, according to claim 1, **characterised in that** its structure comprises these items: two timing devices (2) to provide automatic control over when two connection relays act (4.1)-(4.2); two power resistors (3.1)-(3.2) which, through being connected to or disconnected from the relays, enable the vehicle's motor(s) to accelerate in an automatic progressive manner, progressing from a very low speed when moving off, with just one resistor connected in series with the motors, to a medium speed with both resistors connected in parallel to each other and in series with the motors, and lastly to the vehicle's top speed with both resistors disconnected and the motor(s) being powered directly by the battery (5).
